**Europäisches Patentamt**

**European Patent Office**

**Office européen des brevets**

(11) Veröffentlichungsnummer : **0 203 912
B1**

# EUROPÄISCHE PATENTSCHRIFT

(45) Veröffentlichungstag der Patentschrift : '
**27.07.88**

(51) Int. Cl.⁴ : **B 65 G 51/32**

(21) Anmeldenummer : **86890157.0**

(22) Anmeldetag : **30.05.86**

(54) **Rohrpoststation und/oder -weiche.**

(30) Priorität : **29.05.85 AT 1614/85**

(43) Veröffentlichungstag der Anmeldung :
**03.12.86 Patentblatt 86/49**

(45) Bekanntmachung des Hinweises auf die Patenterteilung : **27.07.88 Patentblatt 88/30**

(84) Benannte Vertragsstaaten :
**CH DE FR IT LI**

(56) Entgegenhaltungen :
EP-A- 0 057 133
DE-A- 3 009 345
DE-A- 3 330 592
DE-B- 1 223 311

(73) Patentinhaber : **RESTACOM AG
Zinggentorstrasse 4
CH-6006 Luzern (CH)**

(72) Erfinder : **Stangl, Wilfried
Dreifaltigkeitsgasse 3/III/81
A-5020 Salzburg (AT)**

(74) Vertreter : **Matschnig, Franz, Dipl.-Ing.
Siebensterngasse 54 Postfach 452
A-1071 Wien (AT)**

## Beschreibung

Rohrpoststation und/oder -weiche, mit einem, in einem Gehäuse angeordneten, vorzugsweise S-förmig gekrümmten Rohrstück, das mit einem Ende mit einem an einer Seite des Gehäuses vorgesehenen (ersten) Anschlußrohr beweglich verbunden und mit einem oder mehreren, an der anderen Seite des Gehäuses vorgesehenen weiteren Anschlußrohren mit Hilfe eines Antriebes wahlweise verbindbar ist, wobei das Rohrstück mit dem (ersten) Anschlußrohr drehbar verbunden ist und das andere Ende des Rohrstückes in einer Brille gehaltert ist, die bezüglich einer feststehenden, die Enden der weiteren Anschlußrohre aufnehmenden Grundplatte im wesentlichen dichtend anliegt und die Achse der Brille mit der Achse des (ersten) Anschlußrohres fluchtet.

Eine Rohrpoststation dieser Art ist aus der DE-OS 33 30 592 bekannt geworden, doch ist diese Station bloß als Weiche verwendbar, bei welcher ein schlagfreies Durchfahren der Büchsen durch eine S-förmige Krümmung des beweglichen Rohrstückes erreicht werden soll.

Aus der DE-OS 30 09 345 geht eine Rohrpostweiche hervor, die — im Gegensatz zu dem vorhin genannten Stand der Technik — an beiden Enden des Gehäuses mehrere Anschlußrohre aufweist, somit nach einem anderen Konstruktionsprinzip gebaut ist.

Bei der Rohrpoststation nach der DE-AS 12 23 311 wird ein gekrümmtes Rohrstück parallel zu den Achsen einer ankommenden und einer abgehenden Rohrpostleitung verschwenkt, somit nicht um die Achse eines zentralen Rohranschlusses an einer Seite des Gehäuses verdreht, wodurch die Kinematik des Antriebes komplizierter wird.

Die EP-A1-57 133 beschreibt eine Rohrpoststation mit einem S-förmigen, um ein zentrales Rohr an einem Ende des Gehäuses verschwenkbaren Rohrstück, dessen anderes Ende einer Vielzahl von Anschlußrohren zugeordnet werden kann. Die Station ist als Endstation, nicht jedoch als Durchlaufstation gedacht.

Ziel der Erfindung ist die Schaffung einer universellen Rohrpoststation, bei der sich vor allem beim Abbremsen ankommender Büchsen keine Probleme mit der Führung der Transportluft, wie z. B. das Auftreten von Druckspitzen im Leitungssystem ergeben.

Dieses Ziel läßt sich mit einer Rohrpoststation der eingangs genannten Art erreichen, bei welcher erfindungsgemäß ein Bypaßrohr vorgesehen ist, das einerseits mit dem Rohrstück pneumatisch verbunden und andererseits in einem weiteren Auge der Brille gehaltert und gemeinsam mit dem Rohrstück und der Brille verdrehbar ist. Die Verwendung des Bypaßrohres ermöglicht auf einfache Weise die ungehinderte Führung der Transportluft auch während des Sendens und Empfangens, sodaß die Station in gleicher Weise sowohl als Sende/Empfangsstation als auch als Weiche einsetzbar ist.

Eine zweckmäßige Weiterbildung der Erfindung zeichnet sich dadurch aus, daß der Antrieb an der drehbaren Brille angreift.

Das Abbremsen der Büchsen wird besonders erleichtert, wenn Drehstellungen der Brille vorgesehen sind, in welchen das in der Brille gehalterte Ende des Rohstückes an der Grundplatte im wesentlichen dichtend anliegt.

Um ein besonders bequemes Be- und Entladen der Station zu ermöglichen, empfiehlt es sich, wenn zumindest einer Öffnung der Grundplatte ein mittels einer Hebe- und Senkeinrichtung vertikal verschiebbares Verschlußstück zugeordnet ist.

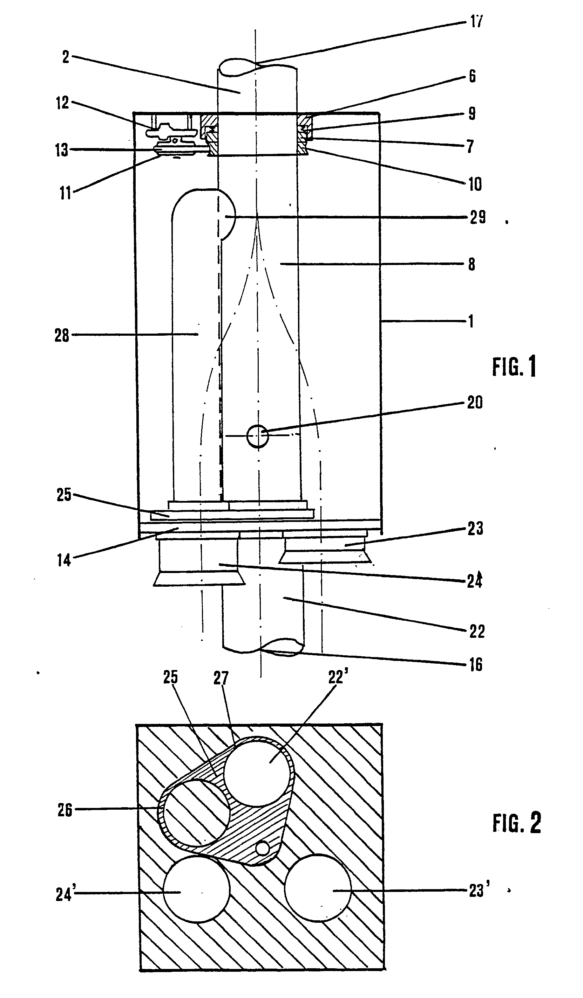

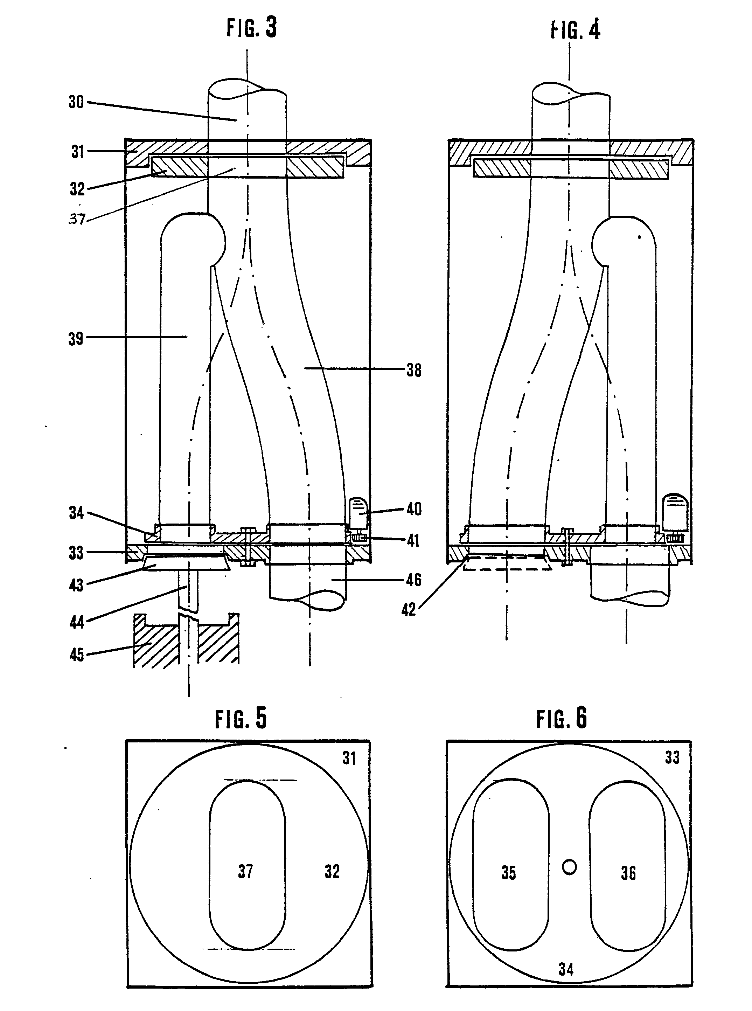

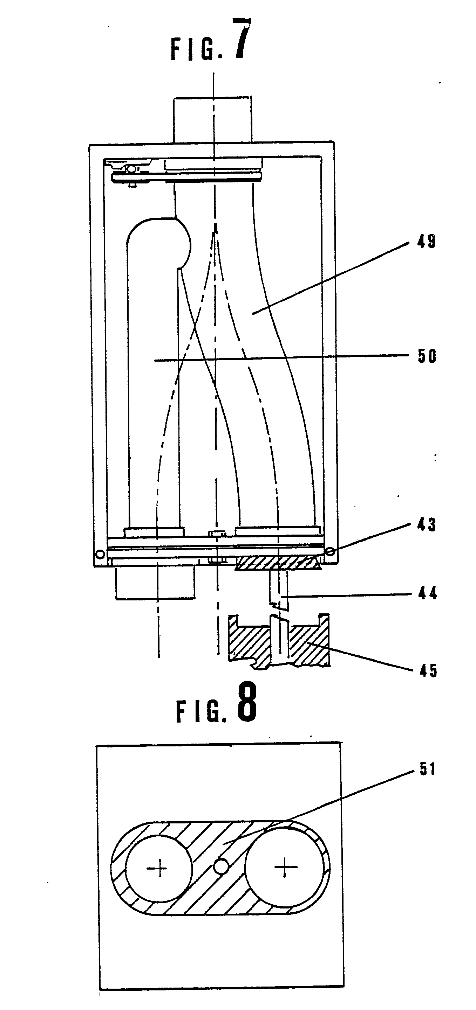

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig. 1 eine erste Ausführungsform der Erfindung in schematischer Seitenansicht, teilweise geschnitten, Fig. 2 eine Draufsicht auf die Grundplatte in Richtung des Pfeiles II der Fig. 1, Fig. 3 und 4 eine zweite Ausführungsform der Erfindung in schematischer Seitenansicht, teilweise geschnitten, in zwei Betriebsstellungen, Fig. 5 die schematische Ansicht eines oberen Drehelementes dieser Ausführungsform, Fig. 6 die schematische Ansicht einer doppeläugigen Brille dieser Ausführungsform und die Fig. 7 und 8 ein weiteres Ausführungsbeispiel in stark vereinfachter Darstellung.

Die in den Fig. 1 und 2 gezeigte Station ist besonders als Sende/Empfangsstation geeignet, wobei ein pneumatisches Abbremsen ankommender Büchsen auf einem Luftpolster möglich ist. Das Gehäuse 1 weist an seinem in der Zeichnung oberen Ende ein (erstes) Anschlußrohr 2 auf. In einer Grundplatte 14 am anderen Ende des Gehäuses 1 sind drei Anschlußrohre 22, 23, 24 vorgesehen, wobei z. B. das Rohr 22 als Durchlaufrohr, das Rohr 23 als Empfangsrohr und das Rohr 24 als Senderohr dienen.

Das Anschlußrohr 2 endet im Gehäuse 1 in einem Ring 6, in dem mittels eines Kragen 7 ein Ende eines Rohrstückes 8 drehbar gelagert ist. Zwischen dem Kragen 7 und dem Ring 6 kann ein Dichtungsring 9 vorgesehen sein. Im Bereich seiner Lagerung ist das Rohrstück 8 mit einer Riemenscheibe 10 versehen, sodaß über die Riemenscheibe 11 eines Motors 12 und einen Zahn- oder Keilriemen 13 das Rohrstück 8 bezüglich des Anschlußrohres 2 verdreht werden kann.

Bezüglich dieser festen Grundplatte 14 ist eine Brille 25 um eine Achse 16 verdrehbar, die zur Achse 17 des ersten Anschlußrohres 2 parallel verläuft oder mit dieser fluchtet. In dieser Brille 25 ist das andere Ende des S-förmig gekrümmten Rohrstückes 8 gehaltert. Es ist ersichtlich, daß bei Verdrehen des Rohrstückes 8 mittels des Motors 12 auch das in der Brille gehalterte Ende des Rohrstückes 8 samt der Brille 25 verdreht werden kann.

In der Brille 25 sind zwei Augen 26, 27 vorgesehen, wobei in einem Auge 26 das Rohrstück 8 mündet. In dem anderen Auge 27 mündet ein Ende eines Bypaßrohres 28, das mit dem Rohrstück 8 über eine Öffnung 29 pneumatisch in Verbindung steht. Die Anschlußrohre 22, 23, 24 münden in drei Öffnungen 22', 23', 24' der Grundplatte 14. Zur Steuerung der Station bzw. der Rohrpostanlage ist einerseits zur Rückmeldung der jeweiligen Position der Brille 25 ein nicht gezeigter Mikroschalter vorgesehen, der von an der Brille vorstehenden Nocken od. dgl. (nicht gezeigt) betätigbar ist. Andererseits weist das Rohrstück 8 in bekannter Weise einen Rohrschalter 20 auf, der beim Durchfahren einer Büchse betätigt wird.

In der Grundstellung der Station liegt das Rohrstück 8 über der Öffnung 22' des Durchlaufrohres 22, sodaß die Büchsen in beiden Richtungen durchlaufen können. Bei Verdrehen der Brille 25 um 60° im Uhrzeigersinn liegt das Ende des Rohrstückes 8 dichtend an der Grundplatte 14 an. Die bewegte Transportluft wird über das Bypaßrohr 28 geführt.

Wenn in dieser Lage aus dem Anschlußrohr 2 eine Büchse eintrifft, wird sie im Rohrstück 8 auf einem Luftpolster über der Grundplatte 14 abgebremst. Wenn der Rohrschalter 20 die Endlage der Büchse auf der Bodenplatte anzeigt, wird die Brille um 60° im Uhrzeigersinn weitergedreht, sodaß die Büchse nun aus dem Empfangsrohr 23 fallen kann (Stellung nach Fig. 2). Wird die Brille 25 von dieser Lage aus um 120° weitergedreht (Sendestellung), steht das Rohrstück 8 über dem Senderohr 24 und eine hier gespeicherte Büchse kann abgesaugt werden.

Ein nochmaliges Weiterdrehen um 120° bringt wieder die Stellung, in welcher das untere Ende des Rohrstückes 8 mit dem oberen Ende des Durchlaufrohres 22 fluchtet (Durchlaufstellung).

Die in den Fig. 3 bis 6 dargestellte Rohrpoststation weist zwei Besonderheiten auf, nämlich einerseits einen flachen Querschnitt sämtlicher Rohre, wodurch die Beförderung auch sperriger, nicht zusammengerollter Güter, wie z. B. Aktenordner, möglich ist und andererseits eine Hebe- und Senkeinrichtung für die Rohrpostbüchsen. Gemäß Fig. 3 mündet am oberen Ende des Gehäuses 1 ein erstes Anschlußrohr 30 mit flachem Querschnitt in eine obere Abdeckplatte 31. In dieser Platte 31 ist ein Drehelement 32 drehbar gelagert (Fig. 5). Am unteren Ende des Gehäuses 1 ist auf einer Grundplatte 33 eine kreisförmige Brille 34 mit zwei Augen 35, 36 drehbar gelagert. Eine dem Rohrquerschnitt entsprechende Öffnung 37 des oberen Drehelementes 32 ist über ein Rohrstück 38 mit einem Auge 35 der Brille 34 verbunden. Weiters ist ein Bypaßrohr 39 vorgesehen, das mit dem anderen Auge 36 der Brille 34 verbunden ist und mit dem Rohrstück 38 pneumatisch in Verbindung steht.

Die Brille 34 ist mittels eines Motors 40 drehbar, wobei z. B. ein Zahnritzel 41 am Umfang der kreisrunden Brille 34 angreift. Eine Öffnung 42 in der Grundplatte 33 ist mittels eines Verschlußstückes 43 verschließbar, das mit Hilfe einer Stange 44 und einer Hebe- und Senkeinrichtung 45 auf-und-ab bewegbar ist. An eine weitere Öffnung der Grundplatte 33 ist ein unteres Anschlußrohr 46 angeschlossen.

Die dargestellte Station arbeitet folgendermaßen. In der Stellung nach Fig. 3 können die Rohrpostbüchsen durch die Anschlußrohre 30 und 46 über das Rohrstück 38 die Station in beiden Richtungen durchlaufen. Das Ende des Bypaßrohres 39 ist durch das Verschlußstück 43 abgeschlossen. In der Stellung nach Fig. 4 hingegen können aus dem Anschlußrohr 30 kommende Büchsen in das Rohrstück 38 eintreten, das zunächst von dem Verschlußstück 43 verschlossen ist. Die Förderluft gelangt durch das Bypaßrohr 39 ungehindert in das untere Anschlußrohr 46. Die Büchse wird auf dem Luftpolster abgebremst, bis ein Fahrkontakt 20 die Endlage der Büchse anzeigt. Nun senkt die Hebe- und Senkeinrichtung 45 das Verschlußstück 43 ab und die Büchse kann entnommen werden.

Zum Senden wird umgekehrt verfahren. Eine Büchse wird mittels der Einrichtung 45 in das Rohrstück 38 geschoben. Dann wird die Brille 34 und damit das Rohrstück 38 um 180° verdreht und die Büchse kann abgesaugt bzw. in beiden Richtungen gefördert werden.

Fig. 7 und 8 zeigen ein Ausführungsbeispiel das im Prinzip der Ausführung nach den Fig. 3 bis 6 entspricht, jedoch ist der Rohrquerschnitt kreisrund. Es sind ein Rohrstück 49, ein Bypaßrohr 50 und eine zweiäugige Brille 51 vorgesehen.

Es versteht sich, daß im Rahmen der Erfindung weitere Ausführungen denkbar sind, wobei die Anzahl der Anschlußrohre variiert werden kann und verschiedene Stellungen und Zwischenstellungen der Brille möglich sind, um verschiedene Weichen- und/oder Sende-/Empfangsmöglichkeiten zu gewährleisten. Das Rohrstück ist zweckmäßigerweise S-förmig gekrümmt, es kann jedoch auch geradlinig verlaufen. Die S-förmige Ausführung ergibt geringere Fahrgeräusche.

**Patentansprüche**

1. Rohrpoststation und/oder -weiche, mit einem, in einem Gehäuse (1) angeordneten, vorzugsweise S-förmig gekrümmten Rohrstück (8, 38, 49), das mit einem Ende mit einem an einer Seite des Gehäuses vorgesehenen (ersten) Anschlußrohr (2, 30) beweglich verbunden und mit einem oder mehreren, an der anderen Seite des Gehäuses vorgesehenen weiteren Anschlußrohren (22, 23, 24, 46) mit Hilfe eines Antriebes wahlweise verbindbar ist, wobei das Rohrstück mit dem (ersten) Anschlußrohr drehbar verbunden ist und das andere Ende des Rohrstückes in einer Brille (25, 34, 51) gehaltert ist, die bezüglich einer feststehenden, die Enden der weiteren Anschlußrohre aufnehmenden Grundplatte (14, 33) im wesentlichen dichtend anliegt und die Achse der Brille mit der Achse des (ersten) Anschlußrohres fluchtet, dadurch gekennzeichnet, daß ein Bypaßrohr (28, 39, 50) vorgesehen ist, das einerseits mit dem Rohrstück (8, 38, 49) pneumatisch verbunden und andererseits in einem weiteren Auge (27, 36) der Brille (25, 34, 51) gehaltert und gemeinsam mit dem Rohrstück und der Brille verdrehbar ist.

2. Rohrpoststation nach Anspruch 1, dadurch gekennzeichnet, daß der Antrieb an der drehbaren Brille (34) angreift.

3. Rohrpoststation nach Anspruch 1 oder 2, dadurch gekennzeichnet, daß in an sich bekannter Weise Drehstellungen der Brille (25) vorgesehen sind, in welchen das in der Brille gehalterte Ende des Rohrstückes an der Grundplatte (14) im wesentlichen dichtend anliegt.

4. Rohrpoststation nach einem der Ansprüche 1 bis 3, dadurch gekennzeichnet, daß zumindest einer Öffnung (42) der Grundplatte (33) ein mittels einer Hebe- und Senkeinrichtung (45) vertikal verschiebbares Verschlußstück (43) zugeordnet ist.

## Claims

1. A pneumatic tube conveyor station or switch comprising a preferably S-shaped, curved tubular member (8, 38, 49), which is disposed in a housing (1) and at one end is movably connected to a (first) connected tube (2, 30), which is provided on one side of the housing, wherein said tubular member is adapted to be selectively connected by a drive to one or more additional connected tubes (22, 23, 24, 46), which are provided on the other side of the housing, said tubular member is rotatably connected to the (first) connected tube, the other end of the tubular member is held in an apertured member (25, 34, 51), which substantially tightly engages a stationary base plate (14, 33), which receives the ends of the additional connected tubes, and the axis of the apertured member is aligned with the axis of the (first) connected tube, characterized in that a by-pass tube (28, 39, 50) is provided, which pneumatically communicates at one end with the tubular member (8, 38, 49) and is held at the other end in another aperture (27, 36) of the apertured member (25, 34, 51) and is rotatable together with the tubular member and the apertured member.

2. A pneumatic tube conveyor station according to claim 1, characterized in that the drive engages the rotatable apertured member (34).

3. A pneumatic tube conveyor station according to claim 1 or 2, characterized in that angular positions are defined for the apertured member (25) in known manner and that end of the tubular member which is held in the apertured member substantially tightly engages the base plate (14) when the apertured member is in any angular positions.

4. A pneumatic tube conveyor station according to any of claims 1 to 3, characterized in that a closure member (43), which is adapted to be vertically displaced by a lifting and lowering device (45), is associated with at least one aperture (42) of the base plate (33).

## Revendications

1. Station de pneumatique et/ou aiguillage de pneumatique comportant un tube (8, 38, 49) disposé dans un boîtier, courbé de préférence en forme de S, qui par une extrémité est relié à un (premier) tube de raccordement (2, 30) prévu d'un côté du boîtier et qui peut être raccordé à l'aide d'un entraînement de manière mobile alternativement à un ou plusieurs tubes de raccordement (22, 23, 24, 46) prévus de l'autre côté du boîtier, le tube étant raccordé de manière rotative au (premier) tube de raccordement et son autre extrémité étant fixée à une lunette (25, 34, 51) qui adhère de manière substantiellement étanche à une plaque de fond (14, 33) qui est fixe et qui reçoit les extrémités des autres tubes de raccordement et que l'axe de la lunette est aligné sur l'axe du (premier) tube de raccordement, caractérisée en ce qu'un tube de dérivation (28, 39, 50) est prévu qui d'une part est raccordé pneumatiquement avec le tube (8, 38, 49) et est d'autre part tenu dans un autre œil (27, 36) de lunette (25, 34, 51) et peut être pivoté conjointement avec le tube et la lunette.

2. Station de pneumatique selon la revendication 1, caractérisée en ce que l'entraînement attaque la lunette rotative (34).

3. Station de pneumatique selon les revendications 1 ou 2, caractérisée en ce que des positions de pivotement de la lunette (25) sont prévues dans une manière en soi connue, dans lesquelles l'extrémité tenue dans la lunette adhère de manière substantiellement étanche à la plaque de fond (14).

4. Station de pneumatique selon l'une des revendications 1 à 3, caractérisée en ce qu'au moins une ouverture (42) de la plaque de fond (33) est associée au moyen d'un dispositif d'élévation et d'abaissement (45) à une pièce de fermeture (43) pouvant être déplacée en verticale.

FIG. 1

FIG. 2

FIG. 3

FIG. 4

FIG. 5

FIG. 6

FIG. 7

49

50

43

44

45

FIG. 8

51